# EUROPÄISCHE PATENTSCHRIFT

(11) **EP 0 544 613 B1**
(45) Veröffentlichungstag und Bekanntmachung des Hinweises auf die Patenterteilung: **22.03.1995**
(21) Anmeldenummer: 92810848.9
(22) Anmeldetag: 04.11.1992
(51) Int. Cl.: F16B 25/10

(54) **Schraube zum selbstschneidenden Setzen**
Self-threading screw
Vis autotaraudante

(30) Priorität: 23.11.1991 DE 4138555
(43) Veröffentlichungstag der Anmeldung: 02.06.1993
(73) Patentinhaber: HILTI Aktiengesellschaft, 9494 Schaan (LI)
(72) Erfinder: Forster, Hubert, W-8086 Moorenweis (DE); Herb, Armin, W-8921 Apfeldorf (DE)
(74) Vertreter: Wildi, Roland

(56) Entgegenhaltungen:
- EP-A- 0 121 108
- EP-A- 0 281 203
- DE-U- 8 908 303
- US-A- 2 314 391
- US-A- 3 541 918
- US-A- 4 536 117

## Beschreibung

Die Erfindung betrifft eine Schraube zum selbstschneidenden Setzen in Aufnahmewerkstoffe wie Beton, Mauerwerk, Gasbeton und dgl. mit Schneidegewinde, wobei die von den Gewindespitzen gebildete Hülle sowie der Kern der Schraube entlang des Schraubenschaftes zylindrisch verlaufen und sich zur Schraubenspitze hin verjüngen und zwar derart, dass der Beginn und das vom Austritt des Schneidgewindes aus dem Kern gebildete Ende der Verjüngung der Hülle axial innerhalb der Verjüngung des Kernes liegen.

Schrauben der vorgenannten Art werden in selbstschneidender Weise zum Einsatz in verschiedenartige Aufnahmewerkstoffe verwendet. Solche Aufnahmewerkstoffe können von Beton, Mauerwerk, Gasbeton und dgl. gebildet werden, dh das Spektrum erstreckt von härteren bis poröseren Werkstoffen. Während bei härteren Werkstoffen, beispielsweise bei Beton ein Setzen derart erfolgt, dass vorerst mit einem Durchmesser, der etwa dem Durchmesser des Kernes der Schraube entspricht, vorgebohrt wird, erfolgt bei poröseren Werkstoffen ein Setzen der Schrauben direkt, dh ohne vorgängiges Vorbohren. Sofern eine Schraube ohne Vorbohren gesetzt werden kann, führt dies zu einem ganz wesentlichen Zeitvorteil beim Aufwand des Setzens. Aus diesem Grunde haben sich die in rede stehenden Schrauben insbesondere dort durchgesetzt, wo diese ohne Vorbohren gesetzt werden können, dh vor allem bei den verschiedenen heute zur Anwendung gelangenden Gasbetonarten.

Nachdem sich die Verwendung von Gasbeton, vor allem auch auf dem Gebiet der Altbausanierung immer mehr durchsetzt, wird der Bedarf von einfach und zuverlässig setzbaren Schrauben, die sich selbstschneidend setzen lassen, immer grösser. Solche Schrauben dienen der Befestigung von Gegenständen aller Art, wie beispielsweise Konsolen, Rohrabhängungen, Deckenabhängungen, Geräten und vielem mehr.

Die Hauptanforderung an Schrauben zum selbstschneidenden Setzen liegt vor allem darin, dass sie sich ohne stark ansteigenden Widerstand in den Aufnahmewerkstoff eindrehen lassen. Dieser Anforderung kommen die meisten sich heute in Gebrauch befindlichen Schrauben nicht nach, da der Kern der Schraube und das Schneidgewinde in einem derartigen Verhältnis zueinander stehen, dass dies nach den ersten Umdrehungen beim Setzen der Schrauben ein starkes Ansteigen des Widerstandes zur Folge hat. Ein Setzen ohne erhöhten Kraftaufwand ist damit nicht möglich. Dieser von der Bedienungsperson aufzubringende Kraftaufwand führt einerseits zu einem umständlichen Setzverfahren und andererseits zu starken Unregelmässigkeiten im Eindringen der Schraube in den Aufnahmewerkstoff, so dass aufgrund des letzteren Nachteiles die Befestigungsqualität sehr stark darunter leidet. Die Befestigungsqualität wird insbesondere auch dann in Frage gestellt, wenn von der Bedienungsperson aufgrund von Ermüdungserscheinungen, Unterbrechungen im Aufbringen des Kraftaufwandes entstehen.

Es hat sich gezeigt, dass der Nachteil dieses ansteigenden Widerstandes beim Setzen der Schrauben vermieden werden kann, wenn das setzrichtungsseitige Ende als sogenannte "Korkenzieherspitze" ausgebildet ist. Die Merkmale eines derart ausgebildeten Endes liegen darin, dass sich der Kern zur Schraubenspitze hin unter einem Winkel verjüngt, der wesentlich kleiner ist, als derjenige Winkel unter dem sich die von den Gewindespitzen des Schneidgewindes gebildete Hülle verjüngt. Aus der US-PS 4 536 117 ist eine Schraube zum selbstschneidenden Setzen mit einem derart ausgebildeten setzrichtungsseitigen Ende bekannt.

Die aus der vorgenannten Veröffentlichung bekannte Schraube kann wohl die Nachteile hinsichtlich ansteigendem Widerstand beim Eindrehen der Schraube lösen, weist aber einen anderweitigen gravierenden Nachteil auf. Dieser Nachteil liegt darin, dass der Austritt des Schneidgewindes aus dem Kern asymmetrisch erfolgt, was dazu führt, dass das setzrichtungsseitige Ende der Schraube beim Eindringen in den Aufnahmewerkstoff zur einen Seite hin gedrängt wird, wodurch eine Schlingerbewegung erzeugt wird. Diese Schlingerbewegung kann sich während des weiteren Eindrehens der Schraube fortsetzen, so dass das Schneidgewinde nur unzureichend in den Aufnahmewerkstoff eingreift, was zu einer ungenügenden Befestigungsqualität führt. Darüber hinaus überträgt sich die Schlingerbewegung auf das Antriebsgerät, beispielsweise in Form eines Handbohrgerätes, so dass nebst den sich auf die Bedienungsperson störend auswirkenden Vibrationserscheinungen auch Langzeitschädigungen am Antriebsgerät auftreten können.

Weitere Schrauben sind aus der US-PS 2 314 391 sowie aus der DE-U-8 908 303 bekannt. Diese bekannten Schrauben weisen eine herkömmliche Spitze sowie jeweils zwei Gewindegänge auf. Dadurch sind diese bekannten Schrauben mit dem Nachteil des ansteigenden Widerstandes beim Setzen behaftet.

Der vorliegenden Erfindung liegt die Aufgabe zugrunde, eine Schraube zum selbstschneidenden Setzen zu schaffen, die sich durch ein einwandfreies Eindrehverhalten auszeichnet, so dass eine hohe Befestigungsqualität erzielt werden kann.

Erfindungsgemäss wird die Aufgabe dadurch gelöst, dass das Schneidgewinde von zwei Gewindegängen gebildet ist, wobei einer der Gewindegänge wenigstens entlang eines Teiles, der sich an die Verjüngung des Kernes anschliesst, eine gegenüber dem anderen Gewindegang niedrigere Gewindehöhe aufweist und die Austritte der beiden Gewindegänge aus der Verjüngung des Kernes einander diametral gegenüberliegend in derselben senkrecht zur Schraubenachse verlaufenden Ebene liegen.

Dank der Anordnung von zwei Gewindegängen erfolgt eine symmetrische Kraftaufteilung sowohl beim Ansetzen als auch beim weiteren Eindrehen der Schraube. Nachdem die Hülle des aus zwei Gewindegängen gebildeten Schneidgewindes sich innerhalb der Verjüngung des Kernes verjüngt, ist der Spitzenwinkel der Verjüngung der Hülle zwangsläufig kleiner als der Spitzenwinkel der Verjüngung des Kernes. Somit tritt der an sich bekannte Effekt auf, gemäss welchem die Schraube vom Schneidgewinde in den Aufnahmewerkstoff eingezogen wird, so dass kein Anstieg des Widerstandes beim Eindrehen eintritt.

Um zu verhindern, dass sich die Schraube beim Anbohren schrägstellt, was durch einseitiges Angreifen des Schneidgewindes im Aufnahmewerkstoff erfolgen kann, liegen die Austritte der beiden Gewindegänge aus der Verjüngung des Kernes in derselben senkrecht zur Schraubenachse verlaufenden Ebene. Es ist somit gewährleistet, dass beide Gewindegänge zur gleichen Zeit am Aufnahmewerkstoff angreifen und dadurch ein Einziehen der Schraube in den Aufnahmewerkstoff gewährleisten.

Nebst dem zeitlich gleichzeitigen Angreifen der Gewindegänge am Aufnahmewerkstoff ist es zudem von Vorteil, wenn örtlich gesehen die beiden Gewindegänge bezogen auf die Schraubenachse symmetrisch angreifen, was dadurch gelöst wird, dass Austritte der beiden Gewindegänge aus der Verjüngung des Kernes einander diametral gegenüberliegen. Dank dieser Anordnung der Austritte der beiden Gewindegänge wird sowohl ein Schrägstellen als auch eine Schlingerbewegung der Schraube vermieden, wobei letzteres insbesondere dank der symmetrischen Aufteilung der Kräfte beim Angreifen der Gewindegänge im Aufnahmematerial vermieden wird.

Insbesondere zur Verringerung des Widerstandes beim Eindrehen sowie zur Förderung des Einziehens der Schraube in den Aufnahmewerkstoff weist einer der Gewindegänge wenigstens entlang eines Teiles der sich an die Verjüngung des Kernes anschliesst, eine gegenüber dem anderen Gewindegang niedrigere Gewindehöhe auf. Dieser Teil des Schraubenschaftes, bei dem einer der Gewindegänge eine niedrigere Gewindehöhe aufweist, erstreckt sich bevorzugt nur über einen Bereich des gesamten Schraubenschaftes. Dieser Teil kann sich beispielsweise zwischen einem Drittel und der Hälfte der Gesamtlänge des Schraubenschaftes bewegen. Entgegen der Schraubenspitze anschliessend an diesen Teil vergrössert sich die Gewindehöhe mit Vorteil innerhalb eines halben bis ganzen Gewindeganges auf die Höhe des anderen Gewindeganges, so dass ab diesem Teil die Schraube mit zwei Gewindegängen von identischer Gewindehöhe versehen ist.

Der Spitzenwinkel der Verjüngung der Hülle des Schneidgewindes beträgt zweckmässigerweise etwa 90 bis 120°. Demgegenüber beträgt der Spitzenwinkel der Verjüngung des Kernes etwa die Hälfte, was vorzugsweise zu einem Winkel von etwa 45° führt. Mit diesen Winkelverhältnissen werden bevorzugte Verhältnisse erreicht, welche einerseits zu einem ausreichenden Einziehen der Schrauben in den Aufnahmewerkstoff führen und andererseits noch ein ausreichend starkes setzrichtungsseitiges Ende der Schraube schaffen. Bevorzugt liegt der Austritt der Gewindegänge aus dem Kern gegenüber der Schraubenspitze etwas zurückversetzt, so dass eine Art Zentrierspitze erzeugt wird. Diese Zurückversetzung beträgt bevorzugt etwa ein Drittel der axialen Länge der Verjüngung des Kernes. Ebenso um etwa ein Drittel der axialen Länge der Verjüngung des Kernes erstreckt sich der Beginn der Verjüngung der Hülle zur Schraubenspitze hin in die Verjüngung des Kernes.

Die Erfindung wird nachstehend anhand von Zeichnungen beispielhaft erläutert. Es zeigen:
- Fig. 1: den vorderen Bereich einer Schraube gemäss Erfindung mit setzrichtungsseitigen Ende in Seitenansicht;
- Fig. 2: eine Ansicht auf das setzrichtungsseitige Ende der Schraube gemäss Fig. 1.

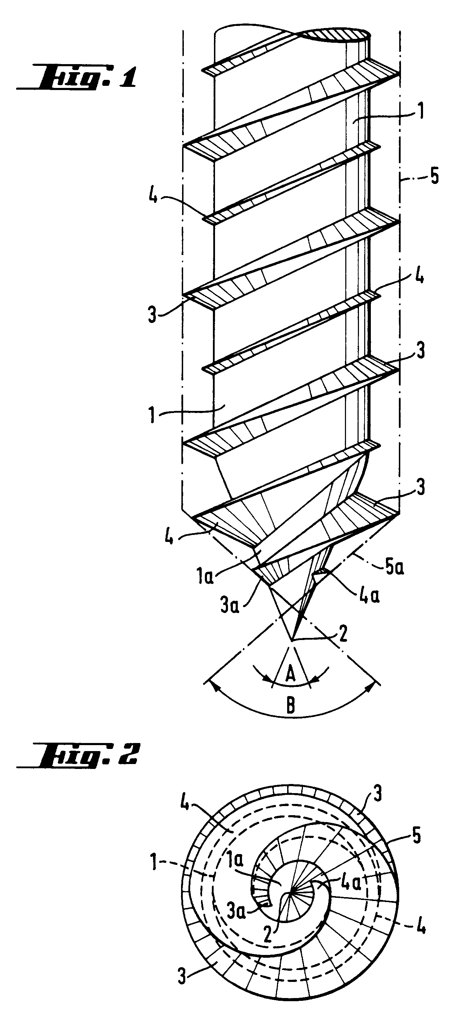

Fig. 1 zeigt den vorderen Bereich einer Schraube zum selbstschneidenden Setzen umfassend einen Schraubenschaft 1. Der Schraubenschaft 1 weist ein setzrichtungsseitiges Ende mit Schraubenspitze 2 auf. Der Schraubenschaft 1 ist bis hin zum setzrichtungsseitigen Ende mit einem Schneidgewinde, bestehend aus Gewindegängen 3, 4 versehen. Der Gewindegang 4 weist dabei in dem dargestellten Bereich des Schraubenschaftes 1 gegenüber dem Gewindegang 3 eine geringere Gewindehöhe auf.

Wie Fig. 1 weiter zeigt, verjüngt sich die als Strichpunktlinie dargestellte Hülle 5 die von den Gewindespitzen des Schneidgewindes gebildet wird zur Schraubenspitze 2 hin. Dabei liegt der Beginn der Verjüngung 5a der Hülle 5 axial innerhalb der Verjüngung 1a des Kernes. Ebenfalls axial innerhalb der Verjüngung 1a des Kernes liegen die Austritte 3a, 4a der Gewindegänge 3, 4. Dadurch entstehen unterschiedliche Spitzenwinkel A, B von Verjüngung 1a des Kernes und Verjüngung 5a der Hülle 5. Dabei beträgt der Spitzenwinkel A der Verjüngung 1a des Kernes etwa die Hälfte des Spitzenwinkels B der Verjüngung 5a der Hülle 5.

Fig. 2 zeigt insbesondere, wie die Austritte 3a, 4a aus der Verjüngung 1a des Kernes einander diametral gegenüberliegen. Die Hülle 5 entspricht in dieser Fig. der äussersten Umrisskante zumindest des Gewindes 3 und gegebenenfalls nach erfolgter Gewindeerhöhung auch derjenigen des Gewindes 4.

## Patentansprüche

1. Schraube zum selbstschneidenden Setzen in Aufnahmewerkstoffe wie Beton, Mauerwerk, Gasbeton und dgl. mit Schneidgewinde, wobei die von den Gewindespitzen gebildete Hülle (5) sowie der Kern der Schraube entlang des Schraubenschaftes (1) zylindrisch verlaufen und sich zur Schraubenspitze (2) hin verjüngen und zwar derart, dass der Beginn und das vom Austritt (3a, 4a) des Schneidgewindes aus dem Kern gebildete Ende der Verjüngung (5a) der Hülle (5) axial gesehen innerhalb der Verjüngung (1a) des Kernes liegen, **dadurch gekennzeichnet**, dass das Schneidgewinde von zwei Gewindegängen (3, 4) gebildet ist, wobei einer der Gewindegänge (4) wenigstens entlang eines Teiles der sich an die Verjüngung (1a) des Kernes anschliesst, eine gegenüber dem anderen Gewindegang (3) niedrigere Gewindehöhe aufweist und die Austritte (3a, 4a) der beiden Gewindegänge (3, 4) aus der Verjüngung (1a) des Kernes einander diametral gegenüberliegend in derselben senkrecht zur Schraubenachse verlaufenden Ebene liegen.

2. Schraube nach Anspruch 1, dadurch gekennzeichnet, dass der Spitzenwinkel (B) der Verjüngung (5a) der Hülle (5) des Schneidgewindes etwa 90° bis 120° beträgt.

3. Schraube nach Anspruch 1 oder 2, dadurch gekennzeichnet, dass der Spitzenwinkel (A) der Verjüngung (1a) des Kernes etwa 45° beträgt.

## Claims

1. A selftapping screw for receiving materials like concrete, brickwork, aerated concrete and the like, comprising a tapping thread, and that the sleeve (5) formed by the thread tips as well as the core of the screw extend cylindrically along the screw shaft (1) and narrow towards the screw tip (2) in such a manner that the beginning and the end of the narrowing (5a) of the sleeve (5), as formed by the exit (3a, 4a) of the tapping thread from the core, are placed within the narrowing (1a) of the core, as seen in the axial direction, **characterized in that** the tapping thread is formed by two screw threads (3, 4), and that one of the screw threads (4) at least along a portion which connects to the narrowing (1a) of the core comprises a lower thread height relative to the other screw thread (3), and that the exits (3a, 4a) of both screw threads (3, 4) from the narrowing (1a) of the core are positioned diametrally opposite each other in the same plane which extends vertically to the screw axis.

2. A screw according to claim 1, **characterized in that** the tip angle (B) of the narrowing (5a) of the sleeve (5) of the tapping thread is between approximately 90° and 120°.

3. A screw according to claim 1 or 2, **characterized in that** the tip angle (A) of the narrowing (1a) of the core is approximately 45°.

## Revendications

1. Vis autotaraudeuse pour la pose dans des matériaux de réception tels que du béton, de la maçonnerie, du béton cellulaire autoclavé et analogues, avec filet tranchant, l'enveloppe (5) constituée par les pointes du filet ainsi que le noyau de la vis s'étendant de manière cylindrique le long de la tige (1) de la vis et se rétrécissant en direction de la pointe (2) de la vis, et ce de telle façon que le début et l'extrémité du rétrécissement (5a) de l'enveloppe (5) constituée par la sortie (3a, 4a) du filet tranchant du noyau se situent, vu dans le sens axial, à l'intérieur du rétrécissement (1a) du noyau, caractérisée en ce que le filet tranchant est constitué par deux pas de vis (3, 4), l'un des pas de vis (4) présentant, au moins le long d'une partie raccordée au rétrécissement (1a) du noyau, une hauteur de filet inférieure à celle de l'autre pas de vis (3), et les sorties (3a, 4a) des deux pas de vis (3, 4) du rétrécissement (1a) du noyau se situant, de manière diamétralement opposée, dans le même plan orienté perpendiculairement à l'axe de la vis.

2. Vis selon la revendication 1, caractérisée en ce que l'angle au sommet (B) du rétrécissement (5a) de l'enveloppe (5) du filet tranchant est d'environ 90° à 120°.

3. Vis selon l'une des revendications 1 ou 2, caractérisée en ce que l'angle au sommet (A) du rétrécissement (1a) du noyau est d'environ 45°.
